# EUROPEAN PATENT SPECIFICATION

(11) **EP 2 117 790 B1**
(45) Date of publication and mention of the grant of the patent: **15.09.2010**
(21) Application number: 08720233.9
(22) Date of filing: 07.02.2008
(51) Int. Cl.: B23Q 1/48, B27M 1/08, B23Q 1/66

(54) **MACHINING CENTER**
BEARBEITUNGSZENTRUM
CENTRE D'USINAGE

(30) Priority: 07.02.2007 IT FI20070027
(43) Date of publication of application: 18.11.2009
(73) Proprietor: Paolino Bacci S.r.l., 56021 Cascina, PI (IT)
(72) Inventor: RUGGIERI, Alberto, 56025 Pontedera Pisa (IT)
(74) Representative: Mannucci, Michele
(86) International application number: PCT/IT2008/000076
(87) International publication number: WO 2008/096389

(56) References cited:
- EP-A- 0 873 817
- EP-A- 1 055 485
- EP-A- 1 364 759
- WO-A-01/89759
- WO-A-02/094500
- WO-A-2004/080649

## Description

The invention relates to a machining center for machining elongated workpieces, in particular, but not exclusively, wooden workpieces such as furniture components and in particular chair legs.

In the field of wood machining, machining centers or machine tools of various configurations have been developed as a function of the type of workpieces to be machined and of the machining operations to be performed thereon.

EP-A-1055485 describes a machine tool or machining center for machining symmetrical elongated elements or components using particularly fast machining cycles. This machining center comprises: a vertical upright along which there moves, according to a first vertical numerically controlled axis of translation, a slide carrying a machining head provided with a first and with a second numerically controlled axis of oscillation or rotation; a pair of workpiece slides, provided with clamping means for the workpieces to be machined, supported by a saddle movable along a second horizontal numerically controlled axis of translation to move toward and away from said vertical upright. On the two slides there are clamped two symmetrical workpieces that are machined simultaneously. The elongated workpieces being machined are oriented parallel to the axis of translation of the saddle with an arrangement so that some faces of the workpiece cannot be machined and therefore, depending on the type of machining operations required, multiple positioning of the same workpiece may be necessary.

Further machining centers or machine tools for machining elongated workpieces are described in WO-A-02094500, WO-A-0189759, EP-A-873817.

WO-A-20040806649 describes a portal machining center, wherein the machining head, provided with movements about two numerically controlled axes of rotation, is supported on a slide movable on a horizontal crossbar. The crossbar is in turn carried by two fixed uprights. The head is movable vertically along a numerically controlled axis of translation guided along vertical guides carried by said slide. This translates along a horizontal numerically controlled axis, parallel to the crossbar. Under the portal there extends a machine bed along which there extends a guide for translation of a workpiece holder, movable along a third horizontal axis of translation.

Portal machining centers or machine tools of this type present the drawback of having insufficient rigidity, due to the length of the force lines that extend from the machining head to the floor to which the portal is anchored. The longer these force lines are, the less rigidity the system has, or the greater the dimension (and therefore cost) of the structure must be to achieve the same rigidity achieved in a machine with vertical upright at lower cost and with a lighter structure.

The object of the invention is to provide a machining center or machine tool that is particularly flexible and suitable to machine elongated workpieces, in particular mass produced components or the like, allowing a high number of faces and typically up to five faces of the workpiece to be machined without requiring repositioning thereof, and which allows high levels of rigidity to be reached with limited costs.

This and other objects and advantages, which will be apparent to those skilled in the art from reading the text below, are attained with a machining center or machine tool as claimed in claim 1. Further features of preferred embodiments of the machining center according to the invention are defined in the dependent claims.

The invention will be better understood by following the description and accompanying drawing, which shows practical non-limiting embodiments of the invention. More in particular, in the drawing:
Fig.1 shows a side view of the machining center in a first possible set-up;
Fig. 2 shows a side view similar to the one in Fig. 1 in a different set-up of the machining center;
Fig. 3 shows a side view similar to the view in Fig. 1 of a modified embodiment of the machining center;
Fig. 4 shows a view according to IV-IV in Fig. 2;
Figs. 5, 6 and 7 show similar plan views in three different operating modes of the machining center; and
Figs. 8 and 9 shows a schematic front view and a schematic plan view of a modified embodiment of the machining center.

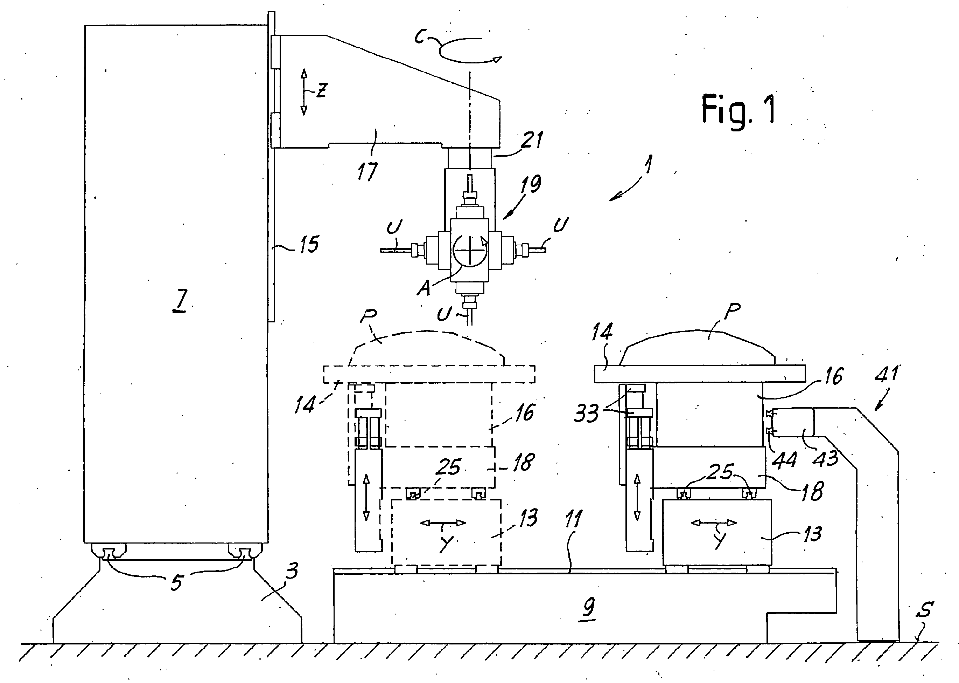

With reference to the embodiment shown by way of example in the drawings, with initial reference to Figs. 1 to 7, in one embodiment the machining center indicated as a whole with 1 includes a machine bed 3 with substantially horizontal guides 5, along which a movable upright 7 slides in a horizontal direction indicated with X. The movement along the guides 5 is controlled by a first numerically controlled axis, hereinafter indicated as axis X.

In one embodiment, approximately orthogonal to the machine bed 3 there extend a pair of base structures 9 provided with guides 11 that extend according to a direction substantially horizontal and orthogonal to the direction X. Along the guides 11 of the two base structures 9 there slide respective workpiece slides 13, each of which is movable according to a numerically controlled axis of translation indicated with Y₁ and Y₂ for the two slides 13. The numerically controlled translation axes Y₁ and Y₂ control the translational movement of the two slides 13 independently from each other along the guides 11 carried by the respective base structure 9. The movements along X and along Y₁ and Y₂ can be controlled by numerically controlled electric motors and screw bars on which there engage nuts integral with the upright 7 and with the slides 13 or in any other appropriate manner known per se.

The side views in Figs. 1, 2 and 3 show with a solid line and with a dashed line two alternative positions of one of the two workpiece slides 13. In the position indicated with a dashed line the slide is in the machining position to allow machining of a workpiece carried by said slide, indicated with P in Fig. 1. In the withdrawn position indicated with the solid line the slide is in proximity of a loading area where an automatic workpiece loading system 41 can be arranged, described below in greater detail, or where the workpieces can be loaded manually.

In the example shown the machine bed 3 and the base structures 9 are separate from one another and anchored to a floor S, but it must be understood that the components 3 and 9 can actually be connected to one another so as to form a more rigid structure.

In one embodiment, the upright 7 movable along the numerically controlled axis X is provided along its vertical extension with a guide 15, along which there can translate a slide 17 carrying a machining head 19. The movement along the guide 15 is a numerically controlled movement and Z indicates the numerically controlled axis, orthogonal to the axes X e Y₁, Y₂. The head 19 is therefore provided with a first vertical numerically controlled movement of translation with respect to the workpieces P to be machined.

In the example shown, the machining head 19 has a cross structure with four spindles with axes arranged orthogonally in twos. The letter U indicates the tools associated with the four spindles. It must be understood that the head 19 could have a different structure, for example with only one pair of spindles or one spindle with double shaft, with three spindles, with one spindle or with a plurality of spindles greater than four or any other appropriate configuration.

As well as with the movements along X and Z, the machining head 19 is also provided with a further two numerically controlled movements of rotation or oscillation about numerically controlled axes of rotation or oscillation indicated with A and C. More specifically, the machining head 19 is carried on the slide 17 by means of an arm 21, the axis of which defines the numerically controlled axis of rotation or oscillation C. Preferably, said axis is substantially vertical, i.e. substantially parallel to the translation axis Z.

The machining head 19 or more precisely the assembly of spindles of said head, oscillates or rotates about the axis A carried by the arm 21, the axis A being substantially orthogonal to the axis C.

As shown in the configuration in Fig. 1, on the workpiece slides 13 surfaces, tables or beams 14 can be arranged, on which workpieces to be machined are placed. The surfaces, tables or beams 14 can be provided with mechanical, pneumatic or other clamping means, known per se, which allow clamping of workpieces P of various shapes to be machined. The type of supporting surface and of clamping means can vary according to the type, the shape and/or the dimension of the workpieces P. Said workpieces can be simple linear elements, or also workpieces of complex shape, such as shells for the production of chair backs or other workpieces of more or less complex structure.

Loading of said workpieces can advantageously take place manually when the slide 13 is in the position indicated with solid line in Fig.1.

In an advantageous embodiment, the surfaces, tables or beams 14 are supported on the respective slide 13 by means of uprights 16. In a preferred embodiment of the invention, the uprights 16 are adjustable along guides 25 integral with the respective slide 13, so that the surfaces to support and clamp the workpieces P can be arranged in the most suitable positions according to the shape and/or dimension of said workpieces P.

In one possible embodiment, the uprights 16 are made integral with sliders 18 that slide along the guides 25 and can be clamped in position along said guides.

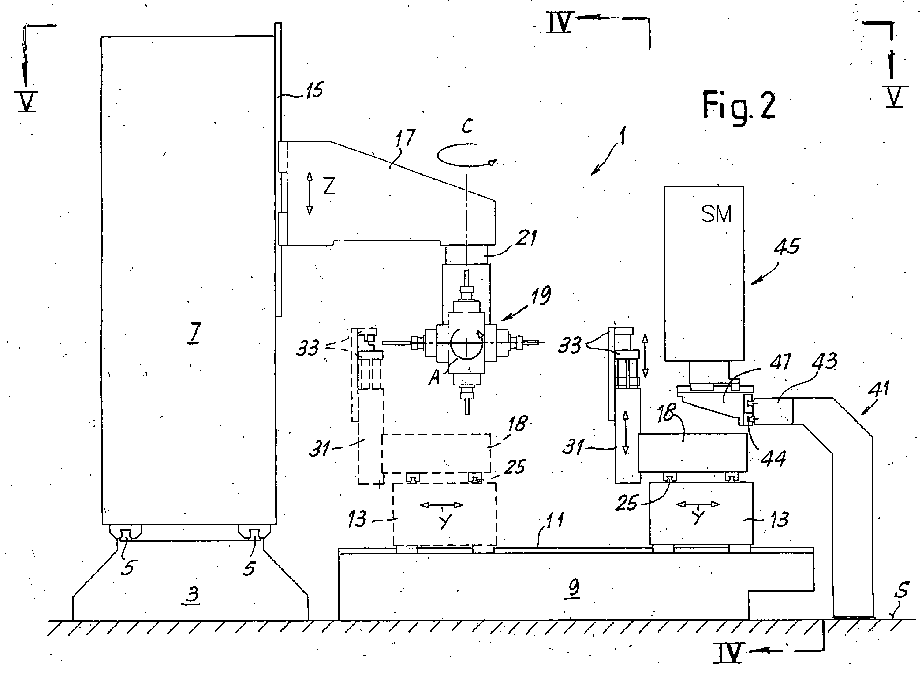

In one embodiment, shown in Figs. 1 and 2, the sliders 18 also carry uprights 31 positionable along the extension of the guides 25 integral with the slides 13. The uprights 31 comprise, in a manner known per se, in the upper area clamping members generically indicated with 33. Said clamping members can be designed to define an upper reference and stop surface, against which the workpiece is clamped by a lower presser, or a lower reference and stop surface, against which the workpiece can be clamped by an upper presser, or preferably a combined system that allows the workpieces to be clamped alternatively against an upper or lower reference surface, according to need, all as known per se.

In a preferred embodiment, shown in Fig. 1, the uprights 31 and/or the clamping members 33 can be arranged on the slide 13 or on the sliders 18 so that they can be lowered to below the height at which the beams, surfaces or tables 14 are placed. In this way, it is possible to set up the machining center with the surfaces, tables or beams 14 simply by lowering the clamping members 33 to the height shown in Fig. 1, without removing said members 32.

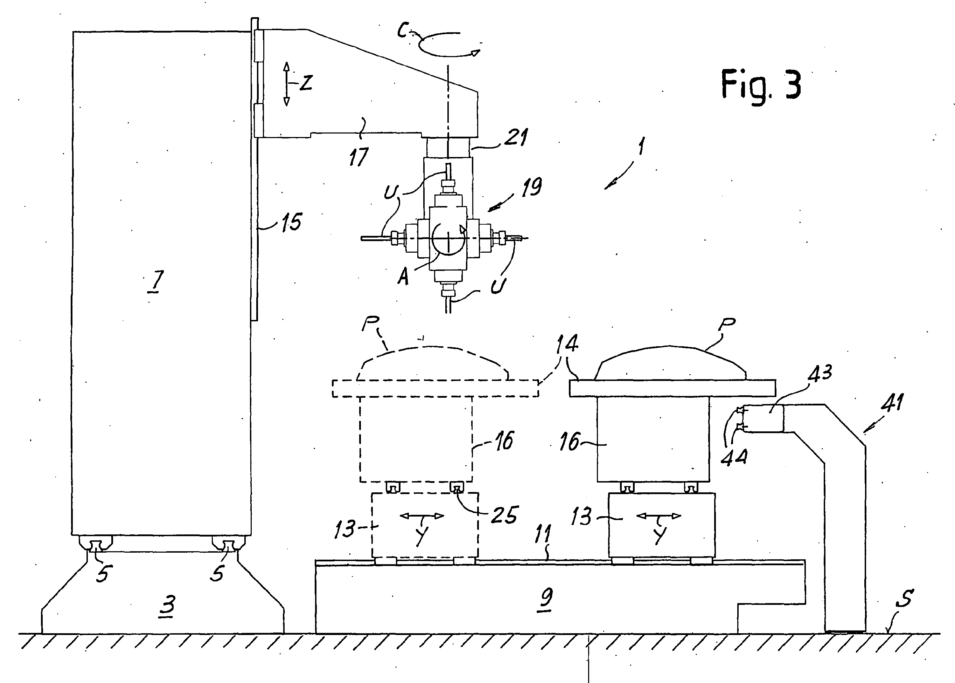

In an alternative embodiment, shown in Fig. 3, however, the uprights 31 with the clamping members 33 can be removed together with the sliders 18 to leave room for the uprights 16 and relative beams 14 or other elements defining the supporting and clamping surface of the workpieces P. In this case the uprights 16 are mounted with respective sliding blocks directly on the guides 25.

In a different intermediate embodiment, it is possible for the sliders 18 to be maintained as base element of the uprights 16, as in Fig. 1, but for the uprights 31 with respective clamping members 33 to be removed from the sliders 18 rather than carried in a position withdrawn below the height of the elements 14.

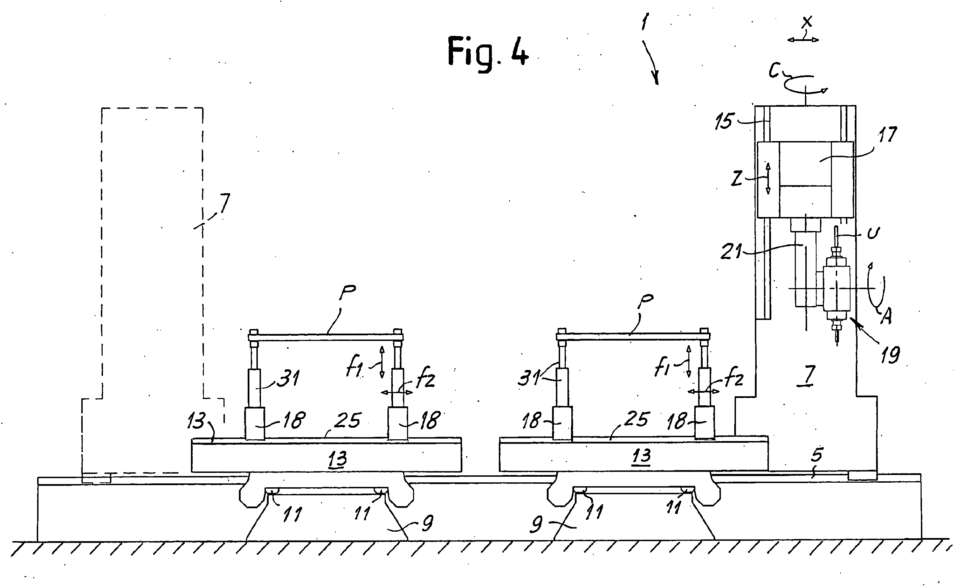

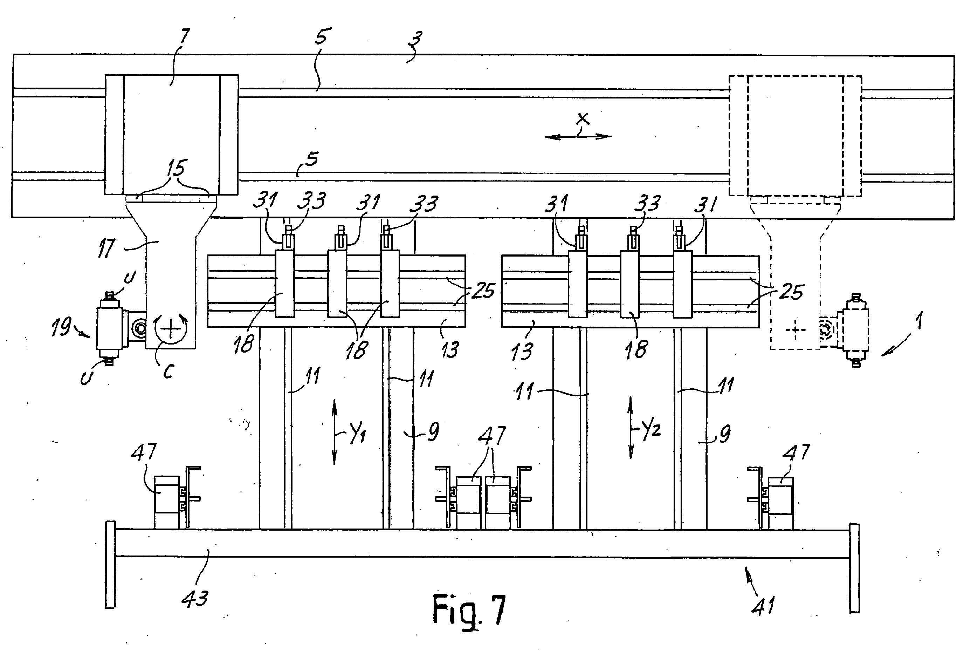

The number of the uprights 16, of the sliders 18 and/or of the uprights 31 can vary according to requirements, for example on the basis of the shape and/or dimensions of the workpieces to be machined. Fig. 4 schematically shows by way of example a configuration with two uprights 31 for each slide, on the same number of sliders 18 adjustable independently from each other along the guides 25 of the two slides. In the set-up in Fig. 7, which will be discussed in greater detail below, each slide 13 is provided with three sliders 18.

In Fig. 4 the two uprights 31 with the clamping members 33 of each slide 13 are positioned at the same height, to machine a rectilinear workpiece P positioned horizontally. However, it must be understood that the clamping height of each element 31, 33 can be adjustable, so that it is also possible to machine curved workpieces, engaging them in points at different heights along their longitudinal extension. In Fig. 4, f₁ and f₂ indicate the movements for adjustment of the workpiece clamping members in horizontal and vertical direction to adapt the clamping point of each member to the shape and to the position of the workpiece P to be machined.

In front of the machine bed 3, on the opposite side of the structures 9 with respect to the upright 7, there is a workpiece loading system, indicated as a whole with 41. In a preferred embodiment, the workpiece loading system 41 presents a substantially horizontal beam 43, which extends parallel to the machine bed 3 along which the upright 7 translates.

In one embodiment, along the beam 43 workpiece loaders are adjustable by means of guides 44, for example automatic loaders of workpieces to be machined coming from a storage unit 45 (Fig. 2). Of the loaders, known per se, only the supports of the workpiece storage positioned above are shown in the drawing and marked therein with 47. Each loader is composed of two half-loaders 47.

In one advantageous embodiment, the guides 44 are substantially continuous for the entire length of the beam 43, so as to allow positioning of the various half-loaders 47 in any position along the extension of said beam, for the purposes that will be apparent from the description below. Also the wiring (not shown in the figure) will be produced so as to allow the aforesaid positioning.

In one possible embodiment there are provided two pairs of half-loaders 47 that can be variedly positioned along the guide 44 of the horizontal beam 43, according to the set-up requirements of the machining center 1, as will be illustrated in greater detail below.

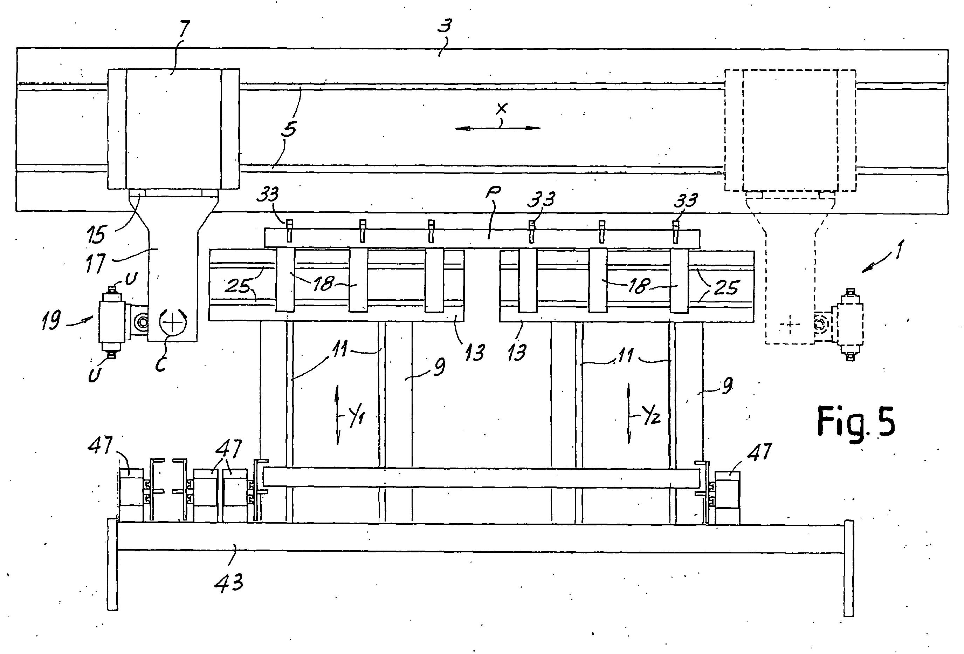

Figs. 5, 6 and 7 show three different configurations of the machine described above to show the flexibility and the operating possibilities offered thereby, in particular due to the structure of the workpiece loading system 41. Fig. 5 shows how the two slides 13 can be utilized to support a single workpiece P of considerable length, which in this case requires six clamping points. In Fig. 5 the two slides 13 are carried in proximity of the machine bed 3 on which the upright 7 slides, so that the workpiece P can be machined. Due to the length of the slide 17 that carries the head 19 in a cantilever fashion, to the presence of the vertical axis C and to the travel with which the workpiece slides 13 are provided, the workpiece P can be machined on five faces, i.e. also on the face opposite the one facing the upright 7.

On the beam 43 of the workpiece loading system 41 two half-loaders 47 spaced from each other are positioned in the operating position, to engage the workpieces P₁ to be machined at the ends thereof. Another pair of half-loaders 47 is held in the idle or park position, for example on the left side (observing the figure) of the beam 41. In this configuration the two slides 13 perform synchronous movements along the numerically controlled axis Y (Y₁, Y₂). The loading and unloading operations cannot take place in masked time, i.e. temporally overlapping the actual machining cycle, but loading, machining and unloading take place sequentially.

Fig. 7 shows a configuration similar to the one shown in Fig. 3, wherein however the slides 13 operate in a pendular cycle, i.e. while one is in the operating position the other can move to the loading and unloading position. The two pairs of half-loaders 47 are respectively positioned in line with the two slides 13. In this case loading and unloading take place in masked time, i.e. during machining of the workpiece on the adjacent slide. While one workpiece slide 13 is in the loading or unloading position, the other can move to the machining position, or vice versa. In Fig. 7 the two slides 13 are both shown in the machining position, but it must be understood that this is only one of the alternative positions that can be taken by the slides, which move independently from one another along the guides 11 that define the axes Y₁, Y₂.

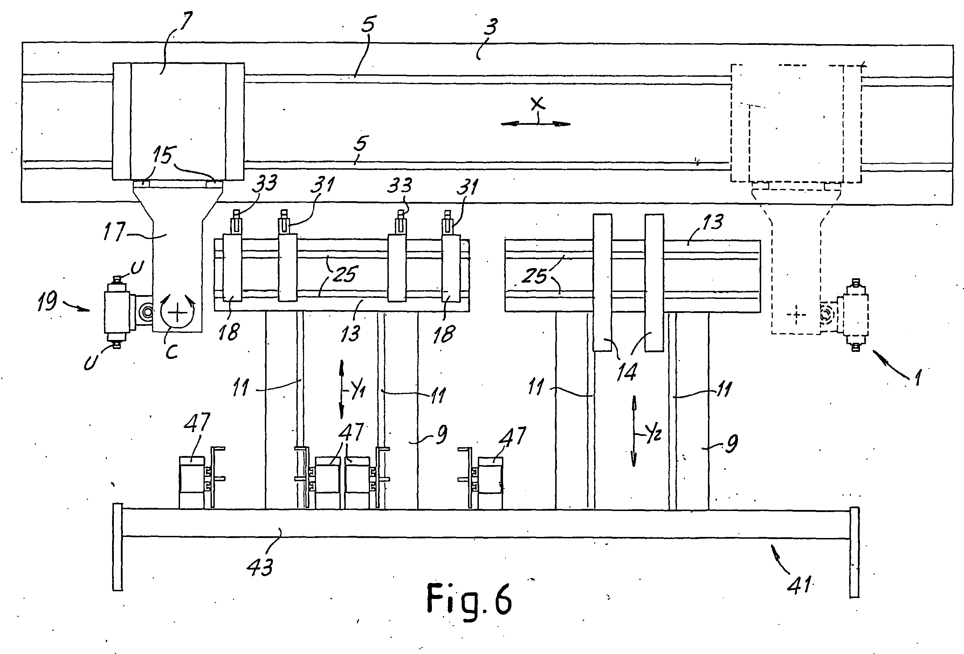

Fig. 6 shows a mixed configuration, in which on the left slide 13 (observing the drawing) workpiece clamping systems 31 are utilized that cooperate with the four half-loaders 47 to receive at each cycle two shorter workpieces from two storage units associated with the first and with the second pair of half-loaders 47. Vice versa, the second workpiece slide 13 is set up for manual loading of complex workpieces P, for example shells intended to form seats, backs or other chair parts. In this case the slide 13 is set up with two beams 14 carried by two underlying uprights 16, not shown in Fig. 6, adjustable along the guides 25 carried by the slide 13.

In a modified embodiment, the left slide can be configured to machine longer workpieces, each of which is loaded by means of a single pair of half-loaders 47, while the other pair of half-loaders can be arranged in a standby or park position.

On the horizontal beam 43 more than two pairs of half-loaders can be disposed, for example four pairs of half-loaders, to feed two series of workpieces for each of the two workpiece slides 13.

In the embodiment shown, with the machine or machining center according to the present invention it is therefore possible to operate in different modes with a high level of flexibility, and to machine both workpieces loaded automatically and more complex workpieces that are loaded manually. These two possibilities can also be used simultaneously (Fig. 6). The machine operates flexibly on workpieces with great variations in length and even on very long workpieces (Fig. 5).

It would also be possible to configure the machine in a more simple set-up with one machine bed structure 9 and one slide 13 movable along the axis Y defined by the guides 11.

The particular arrangement of the numerically controlled axes of oscillation or rotation and of translation described above makes it possible to attain a machine with an extremely rigid structure with limited costs, with said rigidity allowing high precision machining operations to be achieved. In fact, the forces applied to the machining head 19 are transmitted to the ground or floor S along extremely short force lines. This is the case both for stresses generated by the actual machining operation and for stresses generated by the accelerations to which the upright 7 is subjected during its numerically controlled movement of translation along the axis X.

The arrangement of the workpiece loading system 41 and of the workpiece slides 13 with one or with the other of the possible set-ups described above is particularly effective also for operations to transfer and constrain the workpieces. In fact, the workpieces P are translated horizontally from the loading area to the machining area, avoiding movements of oscillation or rotation during transfer from the loading area to the machining area. Among other things, this prevents workpieces from being accidentally dropped when for any reason the clamping effect fails, for example due to a black-out, to an interruption in the suction effect of vacuum clamping means or the like.

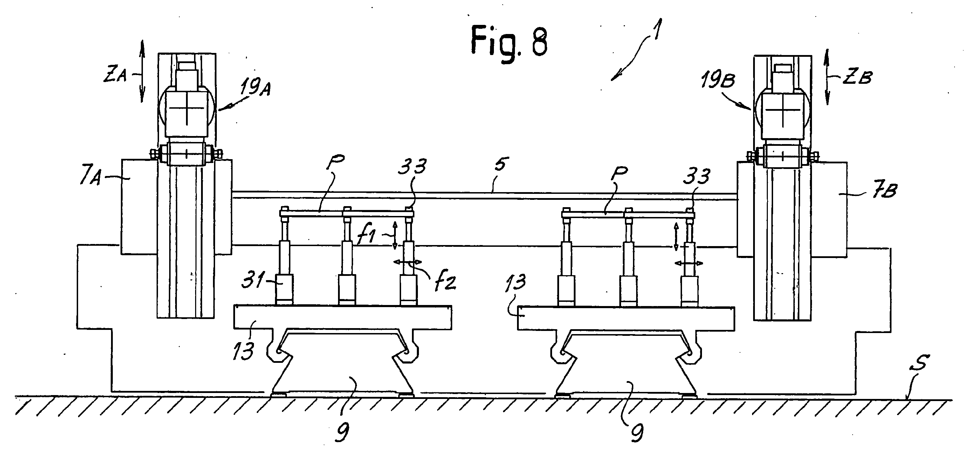

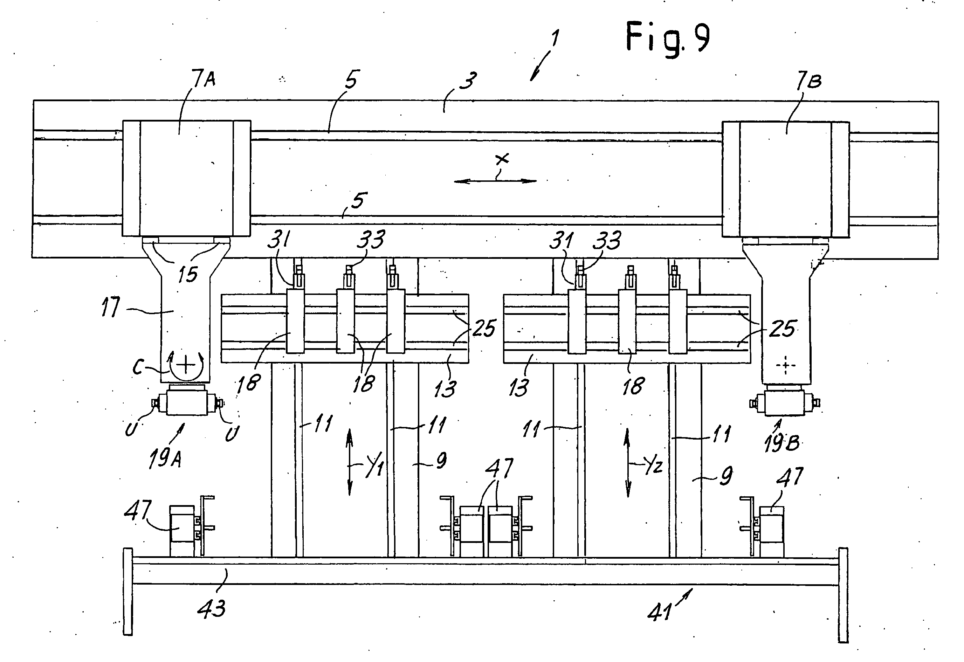

Figs. 8 and 9 show a further modified embodiment of the machining center. The same numbers indicate the same or equivalent parts to those of the previous embodiments. In this embodiment a machine bed 3 is provided, along which two uprights 7A, 7B slide. Each upright 7A, 7B is provided with a head 19A, 19B. In front of the machine bed 3 two base structures 9 for workpiece slides 13 extend, as described above. The two slides 13 can be set up as indicated with reference to the figures described above. The workpiece loading system 41 is again designed with two substantially horizontal beams on which two or more pairs of half-loaders are adjustably positioned.

This embodiment has the same advantages and the same functions described above with regard to the presence of two workpiece slides in combination with the particular type of automatic workpiece loading system 41.

It is understood that the drawing only shows an example given by way of a practical demonstration of the invention, as said invention can vary in forms and arrangements without however departing from the scope of the concept underlying the invention. Any reference numbers in the appended claims are provided to facilitate reading of the claims with reference to the description and to the drawing, and do not limit the scope of protection represented by the claims.

## Claims

1. Machining center for machining elongated wooden workpieces or the like (P), comprising:
- at least one vertical upright (7), extending from a substantially horizontal machine bed (3) and movable, along said machine bed, according to a first numerically controlled axis of translation (X);
- along the extension of said upright, a substantially vertical guide (15), along which there slides a first slide (17) movable along a second numerically controlled axis of translation (Z);
- a machining head (19), supported on said first slide and rotating with respect to said first slide (17) about a first numerically controlled axis of oscillation or rotation (C), said head (19) being provided with a further movement about a second numerically controlled axis of oscillation or rotation (A);
- a pair of workpiece slides (13), provided with clamping means for the workpieces (P) to be machined, each of which is movable along a respective substantially horizontal numerically controlled axis of translation (Y₁, Y₂) to move toward and away from said machine bed (3);
- a workpiece loading system (43), arranged in a loading area in front of said machine bed (3), provided with members to load said workpieces onto said workpiece slides and comprising a beam (43) substantially parallel to said machine bed (3) and a plurality of half-loaders (47) adjustable along said beam (43), said workpiece slides (13) translating the workpieces with a substantially horizontal movement along said third axis of translation (Y) from said loading area to a machining position in proximity of said at least one machining head (19).

2. Machining center as claimed in claim 1, wherein said workpiece clamping means are arranged and designed to clamp elongated workpieces with an orientation substantially parallel to said first axis of translation (X), along which said upright moves.

3. Machining center as claimed in claim 1 or 2, wherein each of said workpiece slides (13) is slidable on a substantially horizontal base structure (9), on which a translation guide (11) parallel to said third axis of translation (Y) is provided, said base structure being rigidly connected to the machine bed (3) along which said upright (7) translates.

4. Machining center as claimed in one of the preceding claims, wherein said pair of workpiece slides are movable along said respective numerically controlled axes of translation (Y₁, Y₂) one independently from the other, such that while one said slide is in the machining position the other of said slides (13) is in the loading area.

5. Machining center as claimed in one of the preceding claims, comprising at least two pairs of half-loaders (47).

6. Machining center as claimed in one of the preceding claims, wherein said clamping means are arranged along an edge of each said slides (13), facing said machine bed (3).

7. Machining center as claimed in one of the preceding claims, wherein said clamping means comprise a plurality of uprights (18), each provided with at least one clamping member (33) for workpieces (P) to be machined.

8. Machining center as claimed in one of the preceding claims, wherein said clamping means are adjustable in variable positions along respective guides (25) supported by each of said slides (13).

9. Machining center according to claim 8, wherein said guides (25), along which said clamping means are adjustable, are substantially parallel to said first axis of translation (X).

10. Machining center as claimed in claim 8 or 9, wherein said slides (13) comprise a plurality of sliders (18), which are adjustable along said guides (25), along which said clamping means are adjustable, and wherein said sliders (18) carry uprights (31) with said clamping members (33) adjustable in a vertical direction.

11. Machining center as claimed in one of the preceding claims, wherein said first axis of rotation or oscillation (C), about which said head (19) is movable with respect to said first slide (17), is positioned at a distance from the upright (7) sufficient to allow machining of a workpiece arranged between the upright (7) and the machining head (19).

12. Machining center as claimed in one of the preceding claims, wherein wherein said machining head (19) is carried in a cantilever fashion by said first slide (17) at a distance from the upright (7) that allows machining of faces of the workpieces opposite with respect to the face of said workpiece (P) oriented toward the upright.

13. Machining center as claimed in one of the preceding claims, wherein said first slide (17) has a length in vertical direction that is less than the length of said substantially vertical guide (15).

14. Machining center as claimed in one of the preceding claims, wherein said substantially vertical guide (15) is connected rigidly to the upright (7); the first slide (17) carrying said machining head (19) being provided with respect to the upright (7) solely with a substantially vertical movement of translation along said second numerically controlled axis of translation (Z).

15. Machining center as claimed in one of the preceding claims, wherein said workpiece slides (13) are provided with a travel, along said third axis of translation (Y), so as to be able to translate said slides at least partially below said workpiece loading system (41).

16. Machining center as claimed in one of the preceding claims, comprising two uprights (7) movable independently from each other along said first axis of translation (X).

17. Machining center as claimed in one of the preceding claims, wherein said first axis of oscillation (C) of the machining head is substantially vertical.

18. Machining center as claimed in claim 10, wherein said clamping members (33) can take a position lowered below the installation height of beams, tables or surfaces to support and clamp the workpieces to be machined.

19. Machining center as claimed in claim 18, wherein said beams, tables or surfaces to support and clamp the workpieces to be machined are supported by uprights integral with said sliders (18) or directly mounted on said guides (25).

## Patentansprüche

1. Bearbeitungszentrum zum Bearbeiten gestreckter hölzerner Werkstücke oder dergleichen (P), das Folgendes umfasst:
- mindestens einen vertikalen Ständer (7), der sich von einem im Wesentlichen horizontalen Maschinenbett (3) erstreckt und, entlang des Maschinenbetts, gemäß einer ersten numerisch gesteuerten Translationsachse (X) beweglich ist;
- entlang der Erstreckung des Ständers eine im Wesentlichen vertikale Führung (15), entlang derer ein erster Schlitten (17) gleitet, der entlang einer zweiten numerisch gesteuerten Translationsachse (Z) beweglich ist;
- einen Bearbeitungskopf (19), der auf dem ersten Schlitten getragen ist und unter Bezug auf den ersten Schlitten (17) um eine erste numerisch gesteuerte Oszillations- oder Rotationsachse (C) rotiert, wobei der Kopf (19) mit einer weiteren Bewegung um eine zweite numerisch gesteuerte Oszillations- oder Rotationsachse (A) versehen ist;
- ein Paar Werkstückschlitten (13), die mit Klemmmitteln für die zu bearbeitenden Werkstücke (P) versehen sind, von denen jeder entlang einer jeweils im Wesentlichen horizontalen numerisch gesteuerten Translationsachse (Y₁, Y₂) beweglich ist, um sich auf das Maschinenbett (3) zu zu bewegen und davon hinweg;
- ein Werkstückbeladungssystem (43), das in einer Beladungsfläche vor dem Maschinenbett (3) angeordnet ist und mit Elementen zum Laden der Werkstücke auf die Werkstückschlitten versehen ist und einen Träger (43) im Wesentlichen parallel zu dem Maschinenbett (3) und einer Anzahl von Halbbeladern (47), die entlang des Trägers (43) einstellbar sind, umfasst, wobei die Werkstückschlitten (13) die Werkstücke mit einer im Wesentlichen horizontalen Bewegung entlang der dritten Translationsachse (Y) von der Beladungsfläche zu einer Bearbeitungsposition in der Nähe des mindestens einen Bearbeitungskopfs (19) verschieben.

2. Bearbeitungszentrum gemäß Anspruch 1, wobei die Werkstück-Klemmmittel angeordnet und ausgelegt sind zum Klemmen gestreckter Werkstücke mit einer Orientierung, die im Wesentlichen parallel zu der ersten Translationsachse (X), entlang derer sich der Ständer bewegt, ist.

3. Bearbeitungszentrum gemäß Anspruch 1 oder 2, wobei jeder der Werkstückschlitten (13) auf einer im Wesentlichen horizontalen Basisstruktur (9) verschiebbar ist, auf der eine Translationsführung (11) parallel zu der dritten Translationsachse (Y) vorgesehen ist, wobei die Basisstruktur starr mit dem Maschinenbett (3) verbunden ist, entlang dessen sich der Ständer (7) verschiebt.

4. Bearbeitungszentrum gemäß einem der vorhergehenden Ansprüche, wobei das Paar von Werkstückschlitten entlang der jeweiligen numerisch gesteuerten Translationsachsen (Y₁, Y₂) einer unabhängig von dem anderen beweglich ist, so dass, während einer der Schlitten in der Bearbeitungsposition ist, der andere der Schlitten (13) in der Beladungsfläche ist.

5. Bearbeitungszentrum gemäß einem der vorhergehenden Ansprüche, das mindestens zwei Paare von Halbbeladern (47) umfasst.

6. Bearbeitungszentrum gemäß einem der vorhergehenden Ansprüche, wobei die Klemmmittel entlang einer Kante von jedem der Schlitten (13), dem Maschinenbett (3) gegenüberstehend, angeordnet sind.

7. Bearbeitungszentrum gemäß einem der vorhergehenden Ansprüche, wobei die Klemmmittel eine Anzahl von Ständern (18) umfassen, die jeder mit mindestens einem Klemmelement (33) für zu bearbeitende Werkstücke (P) versehen sind.

8. Bearbeitungszentrum gemäß einem der vorhergehenden Ansprüche, wobei die Klemmmittel in variablen Positionen entlang jeweiliger Führungen (25), die durch jeden der Schlitten (13) getragen werden, einstellbar sind.

9. Bearbeitungszentrum gemäß Anspruch 8, wobei die Führungen (25), entlang derer die Klemmmittel einstellbar sind, im Wesentlichen parallel zu der ersten Translationsachse (X) sind.

10. Bearbeitungszentrum gemäß Anspruch 8 oder 9, wobei die Schlitten (13) eine Anzahl von Gleitern (18) umfassen, die entlang der Führungen (25) einstellbar sind, entlang derer die Klemmmittel einstellbar sind, und wobei die Gleiter (18) Ständer (31) mit den Klemmelementen (33), die in einer vertikalen Richtung einstellbar sind, tragen.

11. Bearbeitungszentrum gemäß einem der vorhergehenden Ansprüche, wobei die erste Oszillations- oder Rotationsachse (C), um die der Kopf (19) hinsichtlich des ersten Schlittens (17) beweglich ist, in einer Entfernung von dem Ständer (7) angeordnet ist, die ausreichend ist, um das Bearbeiten eines Werkstücks, das zwischen dem Ständer (7) und dem Bearbeitungskopf (19) angeordnet ist, zu erlauben.

12. Bearbeitungszentrum gemäß einem der vorhergehenden Ansprüche, wobei der Bearbeitungskopf (19) in einer Auslegerform durch den ersten Schlitten (17) in einer Entfernung von dem Ständer (7) getragen wird, die das Bearbeiten von Flächen des Werkstücks, die hinsichtlich der Fläche des Werkstücks (P), die zu dem Ständer orientiert ist, gegenüberliegend sind, erlaubt.

13. Bearbeitungszentrum gemäß einem der vorhergehenden Ansprüche, wobei der erste Schlitten (17) eine Länge in vertikaler Richtung aufweist, die kleiner ist als die Länge der im Wesentlichen vertikalen Führung (15).

14. Bearbeitungszentrum gemäß einem der vorhergehenden Ansprüche, wobei die im Wesentlichen vertikale Führung (15) mit dem Ständer (7) starr verbunden ist; der erste Schlitten (17), der den Bearbeitungskopf (19) trägt, hinsichtlich des Trägers (7) lediglich mit einer im Wesentlichen vertikalen Translationsbewegung entlang der zweiten numerisch gesteuerten Translationsachse (Z) versehen ist.

15. Bearbeitungszentrum gemäß einem der vorhergehenden Ansprüche, wobei die Werkstückschlitten (13) mit einem Weg entlang der dritten Translationsachse (Y) versehen sind, so dass sie in der Lage sind, die Schlitten mindestens teilweise unter das Werkstückbeladungssystem (41) zu verschieben.

16. Bearbeitungszentrum gemäß einem der vorhergehenden Ansprüche, das zwei Ständer (7) umfasst, die unabhängig voneinander entlang der ersten Translationsachse (X) beweglich sind.

17. Bearbeitungszentrum gemäß einem der vorhergehenden Ansprüche, wobei die erste Oszillationsachse (C) des Bearbeitungskopfs im Wesentlichen vertikal ist.

18. Bearbeitungszentrum gemäß Anspruch 10, wobei die Klemmelemente (33) eine Position einnehmen können, die unter die Installationshöhe von Trägern, Tischen oder Oberflächen zum Tragen und Klemmen der zu bearbeitenden Werkstücke abgesenkt ist.

19. Bearbeitungszentrum gemäß Anspruch 18, wobei die Träger, Tische oder Oberflächen zum Tragen und Klemmen der zu bearbeitenden Werkstücke durch Ständer getragen werden, die mit den Schlitten (18) einstückig sind oder direkt auf den Führungen (25) montiert sind.

## Revendications

1. Centre d'usinage pour usiner des pièces de bois allongées ou similaires (P), comprenant :
■ au moins un montant vertical (7), s'étendant à partir d'un lit de machine (3) sensiblement horizontal et mobile, le long dudit lit de machine, selon un premier axe de translation (X) commandé de manière numérique ;
■ le long de l'extension dudit montant, un guide sensiblement vertical (15) le long duquel coulisse une première glissière (17) mobile le long d'un deuxième axe de translation (Z) commandé de manière numérique ;
■ une tête d'usinage (19), supportée sur ladite première glissière et tournant par rapport à ladite première glissière (17) autour d'un premier axe d'oscillation ou de rotation (C) commandé de manière numérique, ladite tête (19) étant prévue avec un mouvement supplémentaire autour d'un deuxième axe d'oscillation ou de rotation (A) commandé de manière numérique ;
■ une paire de glissières de pièce (13), prévues avec des moyens de serrage pour les pièces (P) à usiner, dont chacune est mobile le long d'un axe de translation respectif sensiblement horizontal (Y₁, Y₂) commandé de manière numérique pour se déplacer vers et à distance dudit lit de machine (3) ;
■ un système de chargement de pièce (43) agencé dans une zone de chargement en face dudit lit de machine (3), prévu avec des éléments pour charger lesdites pièces sur lesdites glissières de pièce et comprenant une poutre (43) sensiblement parallèle audit lit de machine (3) et une pluralité de demi-chargeurs (47) ajustables le long de ladite poutre (43), lesdites glissières de pièce (13) faisant effectuer un mouvement de translation aux pièces avec un mouvement sensiblement horizontal le long dudit troisième axe de translation (Y) de ladite zone de chargement à une position d'usinage à proximité de ladite au moins une tête d'usinage (19).

2. Centre d'usinage selon la revendication 1, dans lequel lesdits moyens de serrage de pièce sont agencés et conçus pour serrer des pièces allongées avec une orientation sensiblement parallèle audit premier axe de translation (X), le long duquel ledit montant se déplace.

3. Centre d'usinage selon la revendication 1 ou 2, dans lequel chacune desdites glissières de pièce (13) peut coulisser sur une structure de base (9) sensiblement horizontale, sur laquelle on prévoit un guide de translation (11) parallèle audit troisième axe de translation (Y), ladite structure de base étant raccordée de manière rigide à un lit de machine (3) le long duquel ledit montant (7) effectue un mouvement de translation.

4. Centre d'usinage selon l'une quelconque des revendications précédentes, dans lequel ladite paire de glissières de pièce est mobile le long desdits axes de translation (Y₁, Y₂) respectifs commandés de manière numérique, l'un indépendamment de l'autre, de sorte que tandis qu'une desdites glissières est dans la position d'usinage, l'autre desdites glissières (13) est dans la zone de chargement.

5. Centre d'usinage selon l'une quelconque des revendications précédentes, comprenant au moins deux paires de demi-chargeurs (47).

6. Centre d'usinage selon l'une quelconque des revendications précédentes, dans lequel lesdits moyens de serrage sont agencés le long d'un bord de chacune desdites glissières (13), faisant face audit lit de machine (3).

7. Centre d'usinage selon l'une quelconque des revendications précédentes, dans lequel lesdits moyens de serrage comprennent une pluralité de montants (18), chacun prévu avec au moins un élément de serrage (33) pour les pièces (P) à usiner.

8. Centre d'usinage selon l'une quelconque des revendications précédentes, dans lequel lesdits moyens de serrage sont ajustables dans des positions variables le long des guides (25) respectifs supportés par chacune desdites glissières (13).

9. Centre d'usinage selon la revendication 8, dans lequel lesdits guides (25), le long desquels lesdits moyens de serrage sont ajustables, sont sensiblement parallèles audit premier axe de translation (X).

10. Centre d'usinage selon la revendication 8 ou 9, dans lequel lesdites glissières (13) comprennent une pluralité de glissières (18) qui sont ajustables le long desdits guides (25), le long desquels lesdits moyens de serrage sont ajustables, et dans lequel lesdits coulisseaux (18) supportent des montants (31) avec lesdits éléments de serrage (33) ajustables dans une direction verticale.

11. Centre d'usinage selon l'une quelconque des revendications précédentes, dans lequel ledit premier axe de rotation ou d'oscillation (C), autour duquel ladite tête (19) est mobile par rapport à ladite première glissière (17), est positionné à une certaine distance du montant (7) suffisante pour permettre l'usinage d'une pièce agencée entre le montant (7) et latête d'usinage (19).

12. Centre d'usinage selon l'une quelconque des revendications précédentes, dans lequel ladite tête d'usinage (19) est supportée en porte-à-faux par ladite première glissière (17) à une certaine distance du montant (7) qui permet l'usinage des faces des pièces opposées par rapport à la face de ladite pièce (P) orientée vers le montant.

13. Centre d'usinage selon l'une quelconque des revendications précédentes, dans lequel ladite première glissière (17) a une longueur dans la direction verticale qui est inférieure à la longueur dudit guide (15) sensiblement vertical.

14. Centre d'usinage selon l'une quelconque des revendications précédentes, dans lequel ledit guide (15) sensiblement vertical est raccordé de manière rigide au montant (7) ; la première glissière (17) supportant ladite tête d'usinage (19) étant prévue par rapport au montant (7) uniquement avec un mouvement de translation sensiblement vertical le long dudit deuxième axe de translation (Z) commandé de manière numérique.

15. Centre d'usinage selon l'une quelconque des revendications précédentes, dans lequel lesdites glissières de pièce (13) sont prévues avec un déplacement, le long dudit troisième axe de translation (Y), afin de pouvoir faire effectuer un mouvement de translation auxdites glissières au moins partiellement au-dessous dudit système de chargement de pièce (41).

16. Centre d'usinage selon l'une quelconque des revendications précédentes, comprenant deux montants (7) mobiles indépendamment l'un de l'autre le long dudit premier axe de translation (X).

17. Centre d'usinage selon l'une quelconque des revendications précédentes, dans lequel ledit premier axe d'oscillation (C) de la tête d'usinage est sensiblement vertical.

18. Centre d'usinage selon la revendication 10, dans lequel lesdits éléments de serrage (33) peuvent prendre une position abaissée au-dessous de la hauteur d'installation des poutres, des tables ou des surfaces pour supporter et serrer les pièces à usiner.

19. Centre d'usinage selon la revendication 18, dans lequel lesdites poutres, les tables ou les surfaces pour supporter et serrer les pièces à usiner sont supportées par des montants solidaires desdits coulisseaux (18) ou directement montées sur lesdits guides (25).
